Europäisches Patentamt

European Patent Office

Office européen des brevets

(19)

(11) Numéro de publication : **0 022 692**
**B1**

# FASCICULE DE BREVET EUROPÉEN

(12)

(45) Date de publication du fascicule du brevet :
**10.09.86**

(21) Numéro de dépôt : **80400934.8**

(22) Date de dépôt : **24.06.80**

(51) Int. Cl.⁴ : **F 02 K 3/075, F 02 K 3/02**

(54) **Turboréacteur multiflux à taux de dilution pilotable.**

(30) Priorité : **16.07.79 FR 7918317**

(43) Date de publication de la demande :
**21.01.81 Bulletin 81/03**

(45) Mention de la délivrance du brevet :
**10.09.86 Bulletin 86/37**

(84) Etats contractants désignés :
**DE FR GB SE**

(56) Documents cités :
**CH-A- 270 351**
**DE-B- 1 301 650**
**FR-A- 1 199 576**
**FR-A- 1 377 306**
**FR-A- 1 520 460**
**FR-A- 2 025 182**
**FR-A- 2 316 443**
**GB-A- 980 306**
**GB-A- 1 126 707**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Boudigues, Serge**
**38, Avenue Franklin Roosevelt**
**F-92330 Sceaux (FR)**

(74) Mandataire : **Moinat, François et al**
**S.N.E.C.M.A. Service des Brevets Boîte Postale 81**
**F-91003 Evry Cedex (FR)**

EP 0 022 692 B1

Jouve, 18, rue St-Denis, 75001 Paris, France

## Description

L'invention est relative à un turboréacteur double flux (mono-corps ou double-corps) à flux séparés ou mélangés dans lequel l'évolution du taux de dilution en fonction des conditions de vol est liée au cycle. Le dosage du carburant ou les valeurs des sections de tuyère n'ont qu'un faible effet sur cette évolution.

Par ailleurs, pour les vitesses de vol supersonique, le taux de dilution augmente alors qu'il serait hautement souhaitable qu'il diminue afin d'obtenir le maximum de poussée dans un encombrement donné.

On connaît déjà, notamment par le DE-B-1 301 650 des turboréacteurs à double flux dans lesquels on modifie le taux de dilution en fonction des conditions de vol, par l'introduction, dans le canal secondaire, d'un brûleur. Ces turboréacteurs sont équipés d'une turbine placée dans un flux secondaire et soumise à l'action de gaz chauds. Cette turbine est précédée d'un étage distributeur qui permet d'obtenir des conditions optimales par une adaptation de la section de passage. Dans ce dispositif antérieur, il est nécessaire, pour passer du fonctionnement à taux de dilution élevé au fonctionnement à taux de dilution faible, de réoptimiser les paramètres de fonctionnement perturbés par la mise en service du brûleur, en ouvrant la section du distributeur placé dans le flux secondaire. Cette disposition conduit à un transfert d'énergie sous forme thermique.

Cette disposition antérieure utilise donc une turbine sur flux chaud qui présente notamment l'inconvénient de nécessiter, sur ce flux chaud, un distributeur orientable de réalisation difficile. Dans ces dispositifs connus, il n'est envisagé de faire varier le calage du distributeur que pour adapter la section au taux de chauffe du flux secondaire ; il n'est pas mentionné qu'on peut le faire varier en l'absence de chauffe car cela ne présenterait aucun avantage.

Par ailleurs, il est connu par le FR-A-1 520 460 de réaliser un turboréacteur multi-flux comportant au moins un corps tournant directement entraîné par des surfaces aérodynamiques mécaniquement solidaire dudit corps, disposé dans le flux secondaire et agissant par détente du fluide, dans lequel l'énergie du flux secondaire est augmentée par une augmentation du taux de compression, un distributeur dont les aubes sont à calage variable étant placé en amont desdites surfaces aérodynamiques. Le but de cette disposition est de permettre de dépasser le taux de compression généralement obtenu qui se situe aux environs de 25, et ceci sans avoir recours à une machine triple corps. Cette solution consiste donc à utiliser, en plus du groupe de compression usuel, un ou plusieurs compresseurs mécaniquement indépendants, directement entraînés par les surfaces aérodynamiques placées dans la veine secondaire. Dans de telles dispositions, ce ou ces compresseurs supplémentaires ne sont liés mécaniquement ni au groupe de compression ni à la turbine placée dans le flux primaire et entraînant celui-ci.

La présente invention a pour objet un turboréacteur multiflux à taux de dilution pilotable du genre ci-dessus comportant au moins un corps tournant entraîné par des surfaces aérodynamiques mécaniquement solidaires desdites surfaces disposées dans le flux secondaire froid et agissant par détente de l'air, l'énergie desdits flux secondaires étant augmentée par une augmentation du taux de compression, un distributeur dont les aubes sont orientables entre deux positions extrêmes étant placé en amont desdites surfaces aérodynamiques. Conformément à l'invention, ce turboréacteur multi-flux à taux de dilution pilotable se caractérise en ce que le corps tournant est en outre entraîné par une turbine disposée dans le flux primaire chaud.

D'autres caractéristiques et avantages de l'invention seront mieux compris à la lecture de la description qui va suivre montrant des exemples de réalisation et en se référant aux dessins annexés, dans lesquels :

La figure 1 est une demi-vue en coupe longitudinale d'un turboréacteur suivant l'invention avec double flux sur le corps haute pression et dans lequel le flux secondaire est détendu en transférant de l'énergie au corps basse pression,

La figure 2 est une demi-vue en coupe longitudinale d'un turboréacteur dans lequel le flux secondaire est détendu en fournissant de l'énergie au corps haute pression,

La figure 3 est une demi-vue en coupe longitudinale d'un turboréacteur comportant la combinaison des caractéristiques des turboréacteurs représentés aux figures 1 et 2,

La figure 4 est une demi-vue en coupe longitudinale d'un turboréacteur double flux monocorps.

La figure 5 est une demi-vue en coupe longitudinale d'un turboréacteur dans lequel la turbine froide est disposée en amont du compresseur haute pression,

La figure 6 est une demi-vue en coupe d'une variante de réalisation du turboréacteur représenté à la figure 5 et dans laquelle une turbine froide est disposée à la périphérie de la turbine basse pression,

La figure 7 est une demi-vue en coupe d'une variante de réalisation du turboréacteur représenté à la figure 5.

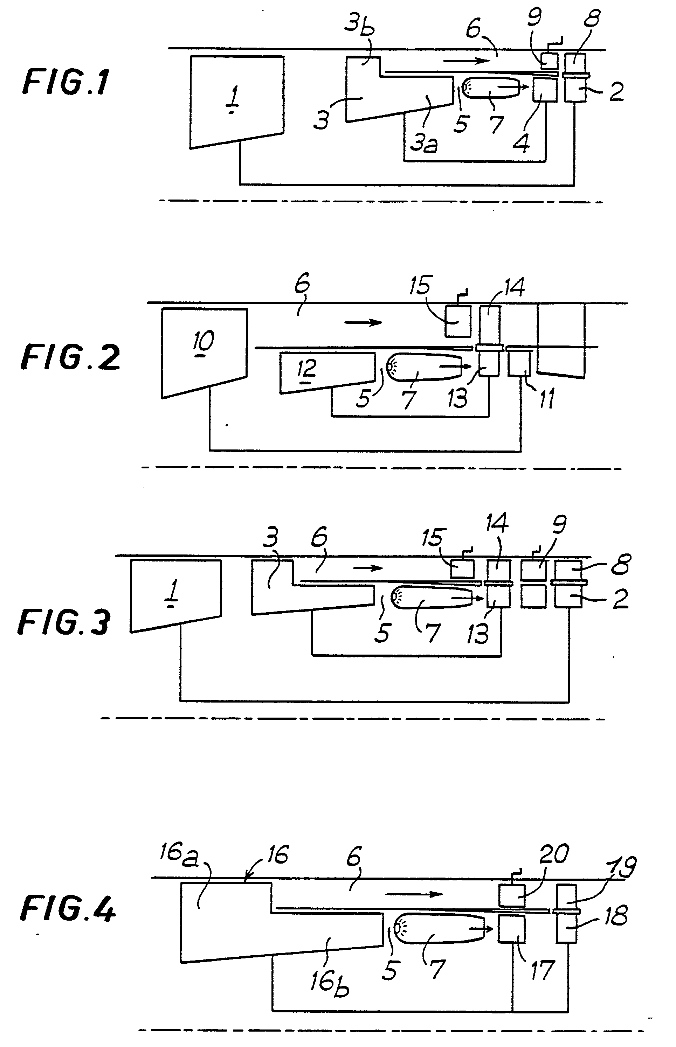

A la figure 1 on a représenté un turboréacteur à double flux qui comprend un corps basse pression constitué d'une soufflante 1 basse pression à un ou plusieurs étages entraînée par une turbine basse pression 2 et un corps haute pression constitué d'un compresseur 3 double flux d'un ou plusieurs étages entraîné en rotation par une turbine 4 haute pression.

Un conduit annulaire interne 5 est parcouru par le flux primaire et un conduit annulaire externe 6 est parcouru par le flux secondaire, le conduit interne 5 parcouru par le flux primaire renferme une partie 3a du compresseur haute pression, une chambre de combustion 7 et les turbines 4 et 2.

La partie 3b du compresseur haute pression surcomprime le flux secondaire dans le conduit 6 avant de le détendre dans une turbine froide 8 disposée à la périphérie des aubes de la turbine basse pression 2. L'énergie supplémentaire fournie au flux secondaire par la surcompression est ainsi transmise sous forme mécanique au corps tournant par la détente de la turbine froide. En amont de la turbine froide 8 est disposé un distributeur 9 à calage variable, le calage le plus faible, pris comme origine, étant celui qui correspond, pour le distributeur, à la section de passage la plus grande.

La turbine haute pression 4 fournit comme énergie :

$$Cp \, \Delta \, 2T + \lambda Cp \, \delta \, T$$

$\Delta \, 2T$ accroissement de température dans le flux primaire .

$\delta \, t$ accroissement de température dans le flux secondaire.

$\Delta \, 2T$ et $\delta \, T$ sont relatifs au seul corps haute pression.

La partie $\lambda \, Cp \, \Delta \, T$ de cette énergie mécanique est rétrocédée partiellement, totalement (ou même plus) à la turbine basse pression 2. Le dosage de ce transfert d'énergie potentielle et non thermique comme il est actuellement connu s'effectue à l'aide du calage variable du distributeur 9 de la turbine froide 8.

En effet dans un turboréacteur double flux double corps classique,

a) le débit total est fixé par N1 (vitesse de rotation du corps basse pression)

b) le débit primaire total est fixé par N2 (vitesse de rotation du corps haute pression).

Il existe une relation $N2 = f (N1, Z, M, \alpha)$ qui pour chaque altitude Z, pour chaque nombre de Mach M et pour une position $\alpha$ de la manette de contrôle du carburant, fixe, pour chaque valeur N1, une valeur N2 et d'après ce qui précède, un rapport des débits primaire et secondaire. Or dans les turboréacteurs de type connu le corps haute pression n'a aucune liaison mécanique avec le flux secondaire et de ce fait, tous les paramètres de réglage des caractéristiques du flux secondaire sont sans influence sensible sur le corps haute pression.

Par contre et conformément aux figures 1, 2, 3, 5 et 6, le turboréacteur comporte un corps haute pression qui présente une liaison mécanique avec les surfaces aérodynamiques placées dans le flux secondaire.

Dans le mode de réalisation de la figure 1, ce contact matériel est obtenu par le compresseur 3b.

De ce fait le transfert d'énergie variable (obtenu par une variation du calage du distributeur de la turbine froide 8) de la basse pression vers la haute pression, s'accompagne d'une variation de la vitesse N2 de rotation du corps haute pression, en fonction de la vitesse N1 de rotation du corps basse pression avec :

$$N2 = g (N1, Z, M, \alpha, \theta)$$

$\theta$ étant le calage du distributeur orientable 9.

Lorsqu'on agit sur le calage $\theta$, on fait varier les caractéristiques (débit, pression) du flux secondaire, la présence, dans ce flux secondaire, d'une surface aérodynamique mécaniquement liée au corps haute pression entraîne une grande efficacité du calage $\theta$ sur la vitesse N2 de rotation du corps haute pression et par suite du débit primaire.

De cette manière une vitesse N1 importante permet d'obtenir de fortes poussées, alors qu'une vitesse N2 importante permet d'obtenir de bonnes consommations spécifiques.

A la figure 2 on a représenté un autre mode de réalisation du turboréacteur dans lequel le corps basse pression est constitué d'un compresseur 10 double flux qui est entraîné par une turbine basse pression 11. Le corps haute pression est constitué d'un compresseur 12 haute pression à simple flux qui est entraîné par une turbine haute pression 13.

La turbine haute pression 13 est munie à sa périphérie d'une turbine froide 14 disposée dans le conduit 6 de flux secondaire et précédée d'un distributeur 15 à calage variable.

Le flux secondaire est surcomprimé dans le compresseur basse pression 10 et détendu dans la turbine froide 14 située à la périphérie de l'aube de la turbine haute pression. Comme dans l'exemple précédent il y a bien une liaison mécanique entre le flux secondaire et la turbine haute pression.

Le transfert d'énergie d'un corps sur l'autre est ainsi assuré et permet, comme dans le cas précédent, de faire évoluer sensiblement le taux de dilution pour chaque cas de vol.

Ce supplément d'énergie est prélevé en partie, en totalité (ou même au-delà) par la turbine froide 14 solidaire de la turbine haute pression.

Il y a donc transfert d'énergie qui, dans ce cas, va du corps basse pression au corps haute pression.

A la figure 3 on a représenté un turboréacteur dans lequel le compresseur 1 basse pression ou soufflante est entraîné par une turbine 2 et le compresseur haute pression 3 à double flux est entraîné par une turbine 13, comme dans le mode de réalisation représenté à la figure 1.

Sur les turbines 2 et 13 sont montées à la périphérie des aubes deux turbines froides 8 et 14 qui sont munies respectivement de distributeurs 9 et 15.

3

Il s'agit ainsi d'une combinaison des modes de réalisation représentés aux figures 1 et 2 et dans laquelle le corps haute pression présente un contact matériel avec le flux secondaire par le compresseur 3 et par la turbine haute pression 13.

A la figure 4 on a représenté un turboréacteur monocorps à double flux qui est constitué d'un compresseur 16 à double flux comportant une partie haute pression 16b et une partie basse pression 16a qui est entraîné par une turbine à deux étages 17, 18 ; la turbine 18 est munie à sa périphérie d'une turbine froide 19 qui est disposée dans le conduit 6 de flux secondaire, ladite turbine 19 comportant en amont un distributeur 20 à calage réglable.

Comme il n'y a qu'un seul corps, les vitesses N2 = N1 et l'angle θ de calage du distributeur 20 est sans effet sur la loi des vitesses N2 = f (N1). En réalité la variation de l'angle θ s'accompagne d'une variation de régime donc du taux de dilution.

Il y a toujours transfert variable d'énergie du flux secondaire vers le flux primaire, mais il n'y a pas transfert d'un corps à l'autre puisque le corps est unique.

De ce fait, on peut considérer que le monocorps est un corps haute pression. Il est évident que l'influence de l'angle dans le cas de ce mode de réalisation est plus faible que dans les cas précédents.

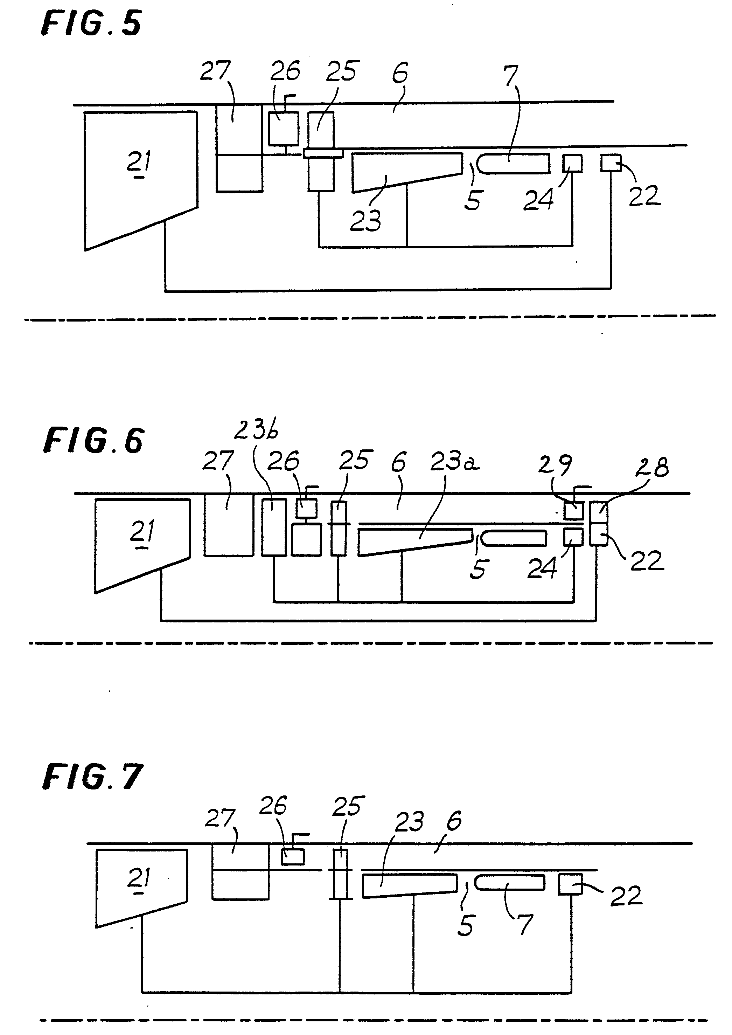

A la figure 5 on a représenté un turboréacteur qui comprend un compresseur basse pression double flux qui est entraîné par une turbine 22, et un compresseur haute pression 23 entraîné par une turbine 24.

Une turbine froide 25 est disposée en amont du compresseur haute pression 23 et elle est reliée mécaniquement au corps haute pression comprenant le compresseur 23. La turbine froide 25 est munie en amont d'un distributeur 26 à calage réglable. L'élément 27 disposé entre le compresseur 21 et la turbine 25 est utilisé comme organe de support de structure et non pas comme organe aérodynamique.

A la figure 6 on a représenté une combinaison des solutions représentées aux figures 5 et 1. Comme dans la figure 1, le turboréacteur présente un corps basse pression 21 directement entraîné par une turbine 22 et un corps haute pression à double flux (23a, 23b) mécaniquement indépendant du premier et directement entraîné par une turbine 24, une turbine froide 28 mécaniquement solidaire du corps 21 étant munie d'un distributeur orientable (29). D'autre part, une turbine froide (28), mécaniquement solidaire du corps 23 et munie d'un distributeur orientable 26, est disposée en amont de la ligne de partage des flux de ce compresseur haute pression double flux.

A la figure 7 on a représenté un autre mode de réalisation d'un turboréacteur dans lequel les compresseurs basse pression 21 et haute pression 23 ainsi que la turbine froide 25 sont entraînés par une turbine 22 et ne forment qu'un seul corps entraîné.

**Revendications**

1. Turboréacteur multiflux à taux de dilution pilotable comportant au moins un corps tournant entraîné par des surfaces aérodynamiques (8 ; 14 ; 14-8 ; 25) mécaniquement solidaires dudit corps, disposées dans le flux secondaire froid et agissant par détente de l'air, l'énergie dudit flux secondaire étant augmentée par une augmentation du taux de compression, un distributeur (9 ; 15 ; 15-9 ; 20 ; 26) dont les aubes sont orientables entre deux positions extrêmes étant placé en amont desdites surfaces aérodynamiques, caractérisé en ce que le corps tournant est en outre entraîné par une turbine (2, 13, 2-13, 18, 22, 22-24) disposée dans le flux primaire chaud.

2. Turboréacteur mutiflux suivant la revendication 1, caractérisé en ce qu'il comprend un compresseur basse pression (1) directement entraîné par une turbine basse pression (2) et un compresseur haute pression (3) à double flux qui surcomprime le flux secondaire, entraîné par une turbine haute pression (4), une turbine froide (8) étant disposée à la périphérie de la turbine basse pression (2) dans le flux secondaire, dont les caractéristiques varient en fonction du calage d'un distributeur orientable (9).

3. Turboréacteur suivant la revendication 1, caractérisé en ce qu'il comprend un compresseur basse pression (10) double flux entraîné par une turbine basse pression (11) et un compresseur haute pression (12) directement entraîné par une turbine haute pression (13), ledit compresseur basse pression surcomprimant le flux secondaire qui est détendu dans une turbine froide (14) disposée à la périphérie de l'aube de la turbine haute pression (13), ladite turbine froide comportant un distributeur orientable (15) à calage variable.

4. Turboréacteur suivant la revendication 1, caractérisé en ce qu'il comprend un compresseur basse pression (1) directement entraîné par une turbine basse pression (2) et un compresseur haute pression à double flux directement entraîné par une turbine (13), ledit compresseur haute pression surcomprimant le flux secondaire avant qu'il soit détendu successivement dans une turbine froide (14) disposée à la périphérie de la turbine haute pression (13) et dans une turbine froide (8) disposée à la périphérie de la turbine basse pression (2) lesdites turbines froides (14, 8) comportant chacune un distributeur orientable (15, 9) à calage variable.

5. Turboréacteur suivant la revendication 1, caractérisé en ce qu'il comprend un seul corps (16) avec compresseur à double flux haute pression et basse pression directement entraîné par une turbine (12) qui est munie à sa périphérie d'une turbine froide (19) dans laquelle est détendu le flux secondaire, ladite turbine froide comportant un distributeur orientable (20) à calage variable.

6. Turboréacteur suivant la revendication 1, caractérisé en ce qu'il comprend un corps basse pression (21) à double flux et un corps haute pression (23) directement entraîné par une turbine (24), ledit corps haute pression comportant en amont une turbine froide (25) liée mécaniquement audit corps haute pression (23), ladite turbine froide (25) comportant un distributeur orientable (26) à calage variable.

7. Turboréacteur suivant la revendication 1, caractérisé en ce qu'il comprend un corps basse pression (21) à double flux directement entraîné par une turbine (22) et un corps haute pression à double flux (23a, 23b) qui surcomprime le flux secondaire et directement entraîné par une turbine haute pression (24), une turbine froide (25) liée mécaniquement au corps haute pression (23) étant disposée en amont de la ligne de partage des flux dudit compresseur double flux et comportant un distributeur orientable (26) à calage variable, et une turbine froide (28) liée mécaniquement au corps basse pression (21) comportant un distributeur orientable (29) à calage variable.

8. Turboréacteur suivant la revendication 1, caractérisé en ce qu'il comprend un seul corps directement entraîné par une turbine (22), ledit corps comportant un compresseur basse pression double flux (21) et un compresseur haute pression (23), une turbine froide (25) mécaniquement solidaire dudit corps et disposée en amont dudit compresseur haute pression (23) comportant un distributeur orientable (26) à calage variable.

## Claims

1. Multiple flow turbo-jet engine with a variable dilution ratio comprising at least one rotatable body driven by aerodynamic surfaces (8 ; 14 : 14-8 ; 25) mechanically rigid with the said body, disposed in the secondary cold flow and acting by deflection of the air, the energy of the said secondary flow being increased by an increase in the compression ratio, an inlet guide nozzle array (9 ; 15 ; 15-9 ; 20 ; 26) of which the blades are adjustable between two extreme positions being disposed upstream of the said aerodynamic surfaces, characterized in this that the rotary body is additionally driven by a turbine (2, 13, 2-13, 18, 22, 22-24) disposed in the primary hot flow.

2. Multiflow turbo-jet engine according to claim 1, characterized in this that it comprises a low pressure compressor (1) directly driven by a low pressure turbine (2) and a high pressure compressor (3) with twin flows which further compresses the secondary flow, driven by a high pressure turbine (4), a cold turbine (8) being disposed on the periphery of the low pressure turbine (2) in the secondary flow, of which the characteristics vary as a function of the adjustment of a variable guide nozzle array (9).

3. Turbo-jet engine according to claim 1, characterized in this that it comprises a low pressure compressor (10) with twin flows driven by a low pressure turbine (11) and a high pressure compressor (12) directly driven by a high pressure turbine (13), the said low pressure compressor further compressing the secondary flow which is derived from a cold turbine (14) disposed on the periphery of the blading of the high pressure turbine (13), the said cold turbine comprising an adjustable inlet guide nozzle array (15) with variable adjustment.

4. Turbo-jet engine according to claim 1, characterized in this that it comprises a low pressure compressor (1) directly driven by a low pressure turbine (2) and a high pressure compressor with twin flows directly driven by a turbine (13), the said high pressure compressor further compressing the secondary flow before it is successively directed into a cold turbine (14) disposed on the periphery of the high pressure turbine (13) and in a cold turbine (8) disposed on the periphery of the low pressure turbine (2) the said cold turbines (14, 8) each comprising an adjustable guide nozzle array (15, 9) with a variable adjustment.

5. Turbo-jet engine according to claim 1, characterized in this that it comprises a single body (16) with a double flow high pressure and low pressure compressor directly driven by a turbine (12) which is provided on its periphery with a cold turbine (19) in which is directed the secondary flow, the said cold turbine comprising an adjustable inlet guide nozzle array (20) with variable adjustments.

6. Turbo-jet engine according to claim 1, characterized in this that it comprises a low pressure body (21) with twin flows and a high pressure body (23) directly driven by a turbine (24), and said high pressure body comprising upstream a cold turbine (25) mechanically connected to the said high pressure body (23), the said cold turbine (25) comprising an adjustable inlet guide nozzle array (26) with variable adjustment.

7. Turbo-jet engine according to claim 1, characterized in this that it comprises a low pressure body (21) with a double flow directly driven by a turbine (22) and a high pressure body with twin flow (23a, 23b) which further compresses the secondary flow and is directly driven by a high pressure turbine (24), a cold turbine (25) mechanically connected to the high pressure body (23) being disposed upstream of the division line of the flows of the said twin flow compressor and comprising an adjustable inlet guide nozzle array (26) with variable adjustments, and a cold turbine (28) mechanically connected to the low pressure body (21) comprising an adjustable inlet guide nozzle array (29) with variable adjustment.

8. Turbo-jet engine according to claim 1, characterized in this that it comprises a single body directly driven by a turbine (22), the said body comprising a low pressure twin flow compressor (21) and a high pressure compressor (23), a cold turbine (25) mechanically rigid with the said body and disposed upstream of the said high pressure compressor (23) comprising an adjustable inlet guide nozzle array (26) with variable adjustment.

## 0 022 692

**Patentansprüche**

1. Mehrkreis-Turbostrahltriebwerk mit steuerbarem Verdünnungsgrad mit wenigstens einem drehbaren Gehäusekörper, der durch mechanisch fest mit ihm verbundene aerodynamische Flächen (8 ; 14 ; 14-8 ; 25) angetrieben ist, die in dem kalten Sekundärstrom angeordnet sind und durch Luftentspannung wirken, wobei die Energie des Sekundärstromes durch eine Vergrößerung des Verdichtungsgrades erhöht wird, ferner mit einem Leitschaufelsatz (9 ; 15 ; 15-9 ; 20 ; 26), dessen Schaufeln zwischen zwei Extrempositionen verstellbar sind und der stromaufwärts der genannten aerodynamischen Flächen angeordnet ist, dadurch gekennzeichnet, daß der drehbare Gehäusekörper außerdem durch eine in dem heißen Primärstrom angeordnete Turbine (2, 13, 2-13, 18, 22, 22-24) angetrieben ist.

2. Mehrkreis-Turbostrahltriebwerk nach Anspruch 1, gekennzeichnet durch einen Niederdruckverdichter (1), der direkt von einer Niederdruckturbine (2) angetrieben ist, einen Zweikreis-Hochdruckverdichter (3) zur Überverdichtung des Sekundärstromes, der durch eine Hochdruckturbine (4) angetrieben ist, sowie eine an der Peripherie der Niederdruckturbine (2) in dem Sekundärstrom angeordnete Kaltturbine (8), deren charakteristiken sich in Abhängigkeit von der Schaufelanstellung eines verstellbaren Leitschaufelsatzes (9) ändern.

3. Mehrkreis-Turbostrahltriebwerk nach Anspruch 1, dadurch gekennzeichnet, daß es einen von einer Niederdruckturbine (11) angetriebenen Niederdruckverdichter (10) und ein direkt von einer Hochdruckturbine (13) angetriebenen Hochdruckverdichter (12) umfaßt, daß der Niederdruckverdichter eine Überverdichtung des Sekundärstroms bewirkt, der in einer Kaltturbine (14) entspannt wird, die an der Schaufelperipherie der Hochdruckturbine (13) angeordnet ist, und daß der Kaltturbine einen einstellbaren Leitschaufelsatz (15) mit veränderbarer Schaufelanstellung zugeordnet ist.

4. Mehrkreis-Turbostrahltriebwerk nach Anspruch 1, dadurch gekennzeichnet, daß ein direkt von einer Niederdruckturbine (2) angetriebener Niederdruckverdichter (1) sowie ein direkt von einer Turbine (13) angetriebener Zweikreis-Hochdruckverdichter (3) vorgesehen sind, daß der Hochdruckverdichter eine Überverdichtung des Sekundärstroms bewirkt, bevor dieser anschließend in einer an der Peripherie der Hochdruckturbine (13) angeordneten Kaltturbine (14) und in einer an der Peripherie der Niederdruckturbine (2) angeordneten Kaltturbine (8) entspannt wird, und daß jeder der genannten Kaltturbinen (14, 8) jeweils ein einstellbarer Leitschaufelsatz (15, 9) mit veränderbarer Schaufelanstellung zugeordnet ist.

5. Mehrkreis-Turbostrahltriebwerk nach Anspruch 1, dadurch gekennzeichnet, daß es einen einzigen Gehäusekörper (16) mit Zweikreis-Hochdruck- und Niederdruckverdichter umfaßt, der (16) von einer Turbine (12) angetrieben ist, die an ihrer Peripherie mit einer Kaltturbine (19) ausgestattet ist, in der der Sekundärstrom entspannt wird, und daß der Kaltturbine ein einstellbarer Leitschaufelsatzt (20) mit veränderbarer Schaufelanstellung zugeordnet ist.

6. Mehrkreis-Turbostrahltriebwerk nach Anspruch 1, dadurch gekennzeichnet, daß es einen Zweikreis-Niederdruckgehäusekörper (21) und einen direkt von einer Turbine (24) angetriebenen Hochdruckgehäusekörper (23) besitzt, daß stromaufwärts des Hochdruckgehäusekörpers eine mechanisch mit ihm verbundene Kaltturbine (25) angeordnet ist, und daß dieser Kaltturbine (25) ein einstellbarer Leitschaufelsatz (26) mit veränderbarer Schaufelanstellung zugeordnet ist.

7. Mehrkreis-Turbostrahltriebwerk nach Anspruch 1, dadurch gekennzeichnet, daß ein direkt von einer Turbine (22) angetriebener Zweikreis-Niederdruckgehäusekörper (21) sowie ein Zweikreis-Hochdruckgehäusekörper (23a, 23b) vorgesehen sind, der eine Überverdichtung des Sekundärstroms bewirkt und der direkt von einer Hochdruckturbine (24) angetrieben ist, daß eine Kaltturbine (25) vorgesehen ist, die mit dem Hochdruckgehäusekörper (23) mechanisch verbunden und stromaufwärts der Stromaufteilungslinie des Zweikreis-Verdichters angeordnet ist und die einen einstellbaren Leitschaufelsatz (36) mit veränderbarer Schaufelanstellung besitzt, und daß eine mechanisch mit dem Niederdruckgehäusekörper (21) verbundene Kaltturbine (28) vorgesehen ist, der ein einstellbarer Leitschaufelsatz (29) mit veränderbarer Schaufelanstellung zugeordnet ist.

8. Mehrkreis-Turbostrahltriebwerk nach Anspruch 1, dadurch gekennzeichnet, daß ein einziger direkt von einer Turbine (22) angetriebener Gehäusekörper vorgesehen ist, der einen Zweikreis-Niederdruckverdichter (21) und einen Hochdruckverdichter (23) enthält, und daß eine mechanisch mit dem Gehäusekörper verbundene Kaltturbine (25) vorgesehen ist, die stromaufwärts des Hochdruckverdichters (23) angeordnet ist und einen einstellbaren Leitschaufelsatz (26) mit veränderbarer Schaufelanstellung besitzt.

**FIG.1**

**FIG.2**

**FIG.3**

**FIG.4**

FIG.5

FIG.6

FIG.7